# EUROPEAN PATENT SPECIFICATION

(11) **EP 1 155 913 B1**
(45) Date of publication and mention of the grant of the patent: **25.01.2006**
(21) Application number: 01303896.3
(22) Date of filing: 27.04.2001
(51) Int. Cl.: B60R 7/00, B60P 3/36

(54) **Storage system**
Lagerungssystem
Système de stockage

(30) Priority: 16.05.2000 GB 0011667
(43) Date of publication of application: 21.11.2001
(73) Proprietor: Hibberd, Stewart Kenneth, Gloucester Gl1 4JE (GB)
(72) Inventor: Hibberd, Stewart Kenneth, Gloucester Gl1 4JE (GB)
(74) Representative: Bailey, Richard Alan

(56) References cited:
- US-A- 3 705 743
- US-A- 4 759 582
- US-A- 5 383 703

## Description

This invention relates to a storage system, and in particular to a portable storage system suitable for use in public spaces.

In public spaces, for example at beaches, it is often desirable for groups to leave their possessions in the care of an individual so that the remainder of the group can undertake an activity, together, in the knowledge that their possessions are safe. Obviously, the individual cannot take part in the activity, and this may be undesirable. It is an object of the invention to provide a storage system permitting the safe storage of the possessions of a group, thus permitting the whole group to take part in the chosen activity or activities without requiring one of the group to miss the activity to take care of the possessions.

US 4759582 describes a portable accommodation unit including a plurality of individually accessible accommodation compartments. This unit can be seen as a storage system according to the preamble of claim 1. US 3705743 and US 5383703 both describe trailers with lockable doors.

According to the present invention there is provided a storage system comprising a wheeled structure carrying a plurality of closable compartments, a lock arrangement being provided to permit each compartment to be locked in a closed condition to prevent access to the interior thereof, the plurality of compartments being arranged in a plurality of rows one above another accessible from the same exterior side of the structure, the compartments being individually closable and lockable.

The wheeled structure may comprise a trailer intended to be towed to a desired location by a suitable vehicle. Alternatively, the wheeled structure may be designed to be moved manually.

The structure may have associated therewith at least one changing compartment.

One or more of the closable compartments is conveniently accessible only through a lockable region of the wheeled structure, thereby providing an increased level of security for the possessions stored therein.

Where such a storage system is provided in a public space, for example at a beach, when a group of people wish to undertake an activity together, for example to swim, take part in a water sport, have a meal together or go shopping together, any of their possessions which they do not wish to take with them can be placed inside one or more of the closable compartments for safe storage until the group returns to the public space, thus none of the group has to miss the activity to take care of the possessions.

The invention will further be described, by way of example, with reference to the accompanying drawings, in which:
Figure 1 is a perspective view of a storage system in accordance with an embodiment of the invention,
Figure 2 is a side view of the storage system of Figure 1,
Figure 3 is a diagrammatic plan view illustrating the layout of the storage system of Figures 1 and 2; and
Figure 4 is a view of the storage system of Figure 1 from one end thereof.

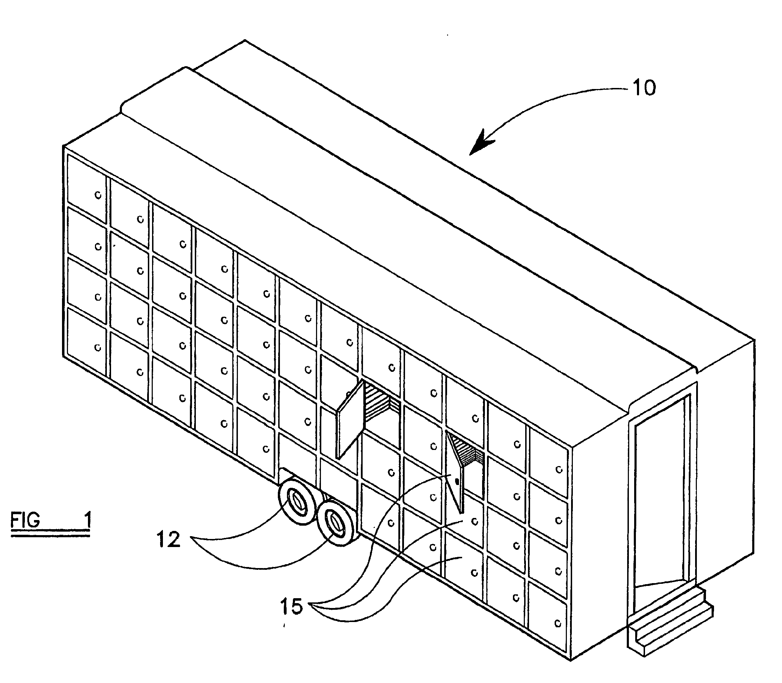

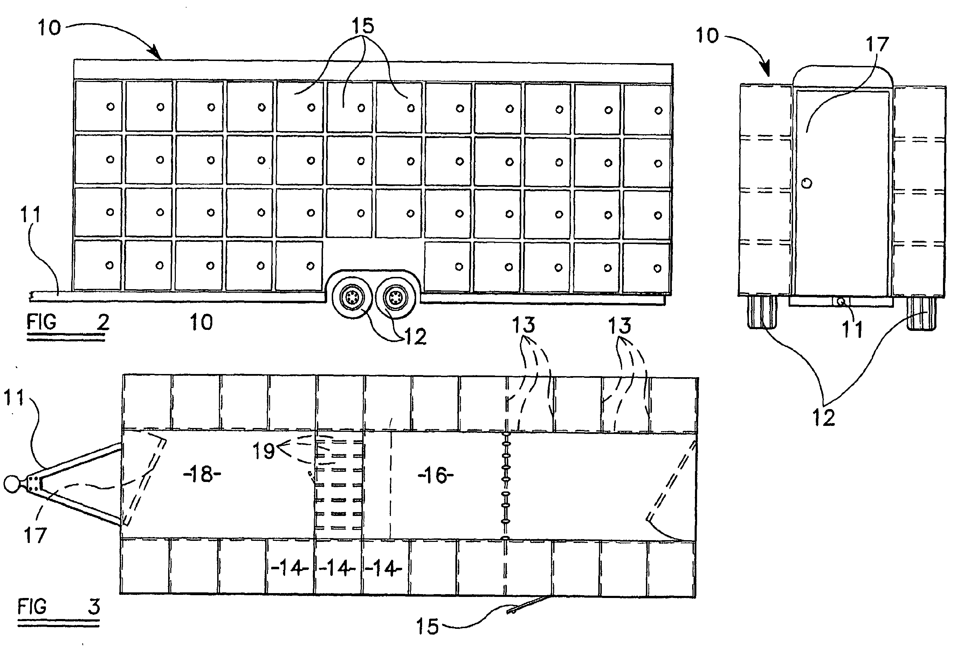

The storage system illustrated in the accompanying drawings comprises a trailer 10 having a conventional tow bar arrangement 11 arranged to be secured to the towing hitch of a suitable vehicle, the trailer 10 being supported by wheels 12. The trailer 10 conveniently further includes feet (not shown) that can be lowered to move into contact with the ground to allow the trailer 10 to be stood in an upright configuration when not being towed by a vehicle. The trailer 10 is provided with partitions 13 that define a plurality of closable compartments 14, each compartment 14 being accessible from the exterior of the vehicle 10. Each compartment 14 has a hinged door 15 which is movable between an open condition and a closed condition, a lock arrangement being provided to permit each door 15 to be locked in its closed condition. The compartments 14 may all be of a uniform size, or alternatively a range of different sizes may be provided. The lock arrangement conveniently comprises individual key operated locks associated with each door 15, but other arrangements could be used.

The partitions 13 further define a changing room 16 accessible from a passage, extending within part of the trailer 10. The changing room 16 is closed by a sliding curtain but, if desired, a hinged door could be provided instead of the curtain.

At one end of the trailer 10, a lockable door 17 is provided, the lockable door 17 restricting access to a compartment 18 from which a number of lockable compartments 19 are accessible. The compartments 19 may be of a uniform size, as illustrated, but could be of a range of sizes, if desired.

In use, the trailer 10 is towed or otherwise moved to a suitable location at a public place, for example at a beach. When a group of individuals wish to undertake an activity together and would like their possessions to be safely stored, then the possessions are moved to the trailer 10 for storage within one or more of the compartments 14, 19. An attendant will open one or more of the compartments to permit the possessions to be positioned therein. The attendant will then lock the compartment, retaining the key for the compartment, the attendant passing a numbered or otherwise labelled wrist band to a member of the group, the wrist band identifying the compartment or compartments within which the property of the group is stored. If desired, prior to storing their possessions within one or more of the compartments, the group may be permitted to use the changing room 16. Where the group possess property thought to be of a particularly high value, then rather than store those possessions in a compartment that is accessible from the exterior of the trailer 10, the group may prefer those possessions to be stored within one of the compartments accessible only from the compartment 18 which, in turn, is accessible only through the lockable door 17. Clearly, by restricting the access to the compartments 19 in this manner, the risk of unauthorised access to the possessions is reduced.

After completion of the activity, when the group require access to their possessions, the identifying wrist band is returned to the attendant who will then unlock the appropriate compartments.

It is thought that the use of wrist bands or the like will be safer than allowing users of the storage system to retain the keys to the compartments as the risk of duplicate keys being manufactured to allow unauthorised access to the property stored with the compartments is reduced. It will be appreciated, however, that where the risk of such copying is low, then the compartment keys could be retained by the users, and it may then be possible to automate the storage system, the lock arrangement for each compartment being, for example, of a coin operated type.

It is envisaged that the use of each compartment could be hired for a set period, for example for a day, with there being no limit on the number of times property is left or removed from the compartment, but obviously the storage system can be used in other ways.

Although in the arrangement described hereinbefore, the trailer is intended to be towed by a vehicle, it will be appreciated that the storage system may be modified to take a form that is readily movable by hand. If desired, certain of the features present in the storage system described hereinbefore may be omitted. For example, the changing rooms may be omitted, thereby permitting the storage system to be of reduced size resulting in the storage system being easier to move.

## Claims

1. A storage system comprising a wheeled structure (10) carrying a plurality of closable compartments (14), wherein said plurality of closable compartments (14) is accessible from the same exterior side of said structure (10), and **characterised by** a lock arrangement being provided to permit each compartment (14) to be locked in a closed condition to prevent access to the interior thereof, and in that the plurality of closable compartments (14) is arranged in a plurality of rows, one above another, the compartments (14) being individually closable and lockable.

2. A storage system as claimed in Claim 1, **characterised in that** the wheeled structure (10) includes a towing hitch(11) to allow the system to be towed by a vehicle.

3. A storage system as claimed in Claim 1 or Claim 2, **characterised in that** the wheeled structure (10) further carries at least one changing compartment (16).

4. A storage system as claimed in any one of the preceding claims, **characterised in that** the wheeled structure (10) includes a lockable region (18), one or more further closable compartments (19) only being accessible from within the lockable region (18).

5. A storage system as claimed in any one of the preceding claims, **characterised in that** each compartment (15) is lockable by a single, common key.

6. A storage system as claimed in any one of Claims I to 4, **characterised in that** each compartment (15) has a respective key associated therewith.

## Patentansprüche

1. Lagerungssystem, das eine mit Rädern versehene Konstruktion (10) aufweist, die eine Vielzahl von verschließbaren Kammern (14) trägt, worin die Vielzahl der verschließbaren Kammern (14) von der gleichen Außenseite der Konstruktion (10) zugänglich ist, und **gekennzeichnet dadurch, dass** eine Verriegelungsanordnung bereitgestellt wird, damit jede Kammer (14) in einen geschlossenen Zustand verriegelt werden kann, um einen Zugang zu deren Inneren zu verhindern, und **dadurch**, dass die Vielzahl der verschließbaren Kammern (14) in einer Vielzahl von Reihen eine über der anderen angeordnet ist, wobei die Kammern (14) einzeln verschließbar und verriegelbar sind.

2. Lagerungssystem nach Anspruch 1. **dadurch gekennzeichnet, dass** die mit Rädern versehene Konstruktion (10) eine Abschleppkupplung (11) umfasst, damit das System durch ein Fahrzeug gezogen werden kann.

3. Lagerungssystem nach Anspruch 1 oder Anspruch 2, **dadurch gekennzeichnet, dass** die mit Rädern versehene Konstruktion (10) außerdem mindestens eine Wechsetkammer (16) trägt.

4. Lagerungssystem nach einem der vorhergehenden Ansprüche, **dadurch gekennzeichnet, dass** die mit Rädern versehene Konstruktion (10) einen verriegelbaren Bereich (18) umfasst, wobei eine oder mehrere weitere verschließbare Kammern (19) nur von innerhalb des verriegelbaren Bereiches (18) aus zugänglich sind.

5. Lagerungssystem nach einem der vorhergehenden Ansprüche, **dadurch gekennzeichnet, dass** jede Kammer (15) mittels eines einzelnen gemeinsamen Schlüssels verriegelbar ist.

6. Lagerungssystem nach einem der Ansprüche 1 bis 4, **dadurch gekennzeichnet, dass** jede Kammer (15) einen entsprechenden dazugehörenden Schlüssel aufweist.

## Revendications

1. Système de stockage comprenant une structure à roues (10) supportant plusieurs compartiments à fermeture (14), lesdits plusieurs compartiments à fermeture (14à) étant accessibles à partir du même côté externe de ladite structure, **caractérisé par** un agencement de verrouillage, permettant le verrouillage de chaque compartiment (14) dans un état fermé pour empêcher l'accès à l'intérieur de celui-ci, et en ce que les plusieurs compartiments à fermeture (14) sont agencés dans plusieurs rangées, l'un au-dessus de l'autre, les compartiments (14) pouvant être fermés et verrouillés individuellement.

2. Système de stockage selon la revendication 1, **caractérisé en ce que** la structure à roues (10) englobe un attelage de remorquage (11) pour permettre le remorquage du système par un véhicule.

3. Système de stockage selon les revendications 1 ou 2, **caractérisé en ce que** la structure à roues (10) supporte en outre au moins un compartiment-vestiaire (16).

4. Système de stockage selon l'une quelconque des revendications précédentes, **caractérisé en ce que** la structure à roues (10) englobe une région à verrouillage (18), un ou plusieurs compartiments à fermeture additionnels (19), un seul étant accessible à partir de l'intérieur de la région à verrouillage (18).

5. Système de stockage selon l'une quelconque des revendications précédentes, **caractérisé en ce que** chaque compartiment (15) peut être verrouillé par une seule clé commune.

6. Système de stockage selon l'une quelconque des revendications 1 à 4, **caractérisé en ce que** chaque compartiment (15) comporte une clé respective qui y est associée.
